# EUROPÄISCHE PATENTSCHRIFT

(11) **EP 0 658 139 B1**
(45) Veröffentlichungstag und Bekanntmachung des Hinweises auf die Patenterteilung: **22.05.1996**
(21) Anmeldenummer: 93919180.5
(22) Anmeldetag: 26.08.1993
(51) Int. Cl.: B32B 15/08

(54) **POLYPROPYLENFOLIE-HAFTVERMITTLER-METALL-VERBUND SOWIE DESSEN VERWENDUNG ZUR HERSTELLUNG VON VERPACKUNGSBEHÄLTERN**
POLYPROPYLENE FOIL-BONDING AGENT-METAL COMPOSITE AND ITS USE FOR PRODUCING PACKAGING CONTAINERS
COMPOSITE METAL-AGENT ADHESIF-FILM DE POLYPROPYLENE ET SON UTILISATION DANS LA FABRICATION DE CONTENANTS D'EMBALLAGE

(30) Priorität: 03.09.1992 DE 4229419
(43) Veröffentlichungstag der Anmeldung: 21.06.1995
(73) Patentinhaber: BASF Lacke + Farben AG, D-48165 Münster-Hiltrup (DE)
(72) Erfinder: KRAUSE, Siegfried, D-48165 Münster (DE); KIRIAZIS, Leonidas, D-48151 Münster (DE)
(86) Internationale Anmeldenummer: EP9302298
(87) Internationale Veröffentlichungsnummer: WO9405493

(56) Entgegenhaltungen:
- EP-A- 0 372 875
- WO-A-91/03373
- FR-A- 2 430 308

## Beschreibung

Die vorliegende Erfindung betrifft Polypropylenfolie-Haftvermittler-Metall-Verbunde, wobei als Haftvermittler mit Carboxylgruppen und/oder Anhydridgruppen modifiziertes Polypropylen verwendet wird, sowie die Verwendung der Kunststoffolie-Metall-Verbunde zur Herstellung von Verpackungsbehältern.

Zur Herstellung einer Dose oder eines Verschlusses für den Einsatz als Verpackungsmaterial, insbesondere für die Verpackung von Lebensmitteln, werden Bleche aus Weißblech, chromatiertem Stahl wie ECCS (electrolytic chromium-coated steel) und Aluminium in Tafel- oder Bandform beschichtet. Die Lackschicht wirkt als Schutzschicht, um das Metall vor dem Angriff des Füllgutes und daraus resultierender Korrosion einerseits zu schützen und um andererseits eine Beeinflussung des Füllgutes durch Korrosionsprodukte des Metalles zu verhindern. Selbstverständlich darf es auch durch die Lackschicht selbst, etwa durch herausgelöste Lackbestandteile, zu keiner Beeinflussung bzw. Beeinträchtigung des Füllgutes kommen, weder bei der im Anschluß an die Abfüllung durchgeführten Sterilisierung des Füllgutes noch bei der anschließenden Lagerung der verpackten Güter, insbesondere Lebensmittel.

Weiterhin müssen die Lacke derart aufgebaut sein, daß sie den bei der Weiterverarbeitung der beschichteten Bleche zu den Dosen oder Verschlüssen auftretenden mechanischen Beanspruchungen, etwa beim Verformen, Stanzen, Bördeln, Sicken u.ä. der Bleche, standhalten.

Außerdem müssen aufgrund von hohen Lösemittelemissionen beim Trocknen der Lackschicht Vorkehrungen getroffen werden, diese Emissionen und die damit verbundene Umweltbelastung so gering wie möglich zu halten.

Als vorteilhaftes Verfahren für die Beschichtung von Blechen, die insbesondere zur Herstellung von Lebensmittelverpackungen eingesetzt werden, hat sich die Folienbeschichtung von Metallblechen erwiesen. So ist beispielsweise in der DE-OS 3 128 641 ein Verfahren zur Herstellung von Laminaten für Lebensmittelverpackungen beschrieben, bei dem das Metallblech und ein thermoplastischer Harzfilm zusammen mit einem zwischen diesen Schichten angeordneten Klebstoff auf Basis eines carboxylgruppenhaltigen Polyolefins auf Temperaturen oberhalb des Schmelzpunktes des Klebstoffes aufgeheizt und dann unter Anwendung von Druck zusammen abgekühlt werden, wodurch der Metall-Kunststoff-Verbund hergestellt wird.

Weiterhin sind auch aus der DE-OS 2 912 023, der GB-A-2027391 und der EP-B-31701 Laminate und aus diesen Laminaten hergestellte Lebensmittelverpackungsbehälter, insbesondere Beutel, bekannt.

Verbunde von Metallfolien mit Polyolefin- bzw. Polypropylenfolien, wobei zur besseren Haftung zwischen der Metallfolie und der Polyolefinfolie eine Haftvermittlerschicht angeordnet ist, sind in einer Vielzahl bekannt. Als Haftvermittler werden beispielsweise polar-modifizierte, z.B. mit Carbonsäuren oder Carbonsäureanhydriden gepfropfte Polypropylene eingesetzt. Derartige Verbunde sind z.B. beschrieben in der EP-A-101 250 und der EP-A-312 306. Bei Polypropylendeckschichten und Polypropylenhaftvermittlern tritt jedoch das Problem auf, daß die mit dem Metall verklebten Kunststoffolien eine Neigung zu Weißbruch haben. Ansonsten weisen Polypropylen-Kunststoffolien eine größere Chemikalienbeständigkeit auf als Polyethylen-Kunststoffolien.

Der vorliegenden Erfindung lag somit insbesondere die Aufgabe zugrunde, Polypropylendeckschicht-Haftvermittler-Metall-Verbunde zu entwickeln, die keinen Weißbruch aufweisen. Außerdem sollte natürlich die Haftung der Kunststoffdeckschicht zu der Metallfolie ausgezeichnet sein. Selbstverständlich sollte dabei die thermoplastische Polypropylenfolie das Metall optimal vor dem Angriff des Füllgutes und daraus resultierender Korrosion schützen sowie eine Beeinflussung des Füllgutes durch Korrosionsprodukte des Metalles verhindern. Desweiteren sollte es selbstverständlich durch die Kunststoffolie selbst, etwa durch herausgelöste Lackbestandteile, zu keiner Beeinflussung bzw. Beeinträchtigung des Füllgutes kommen, weder bei der im Anschluß an die Abfüllung durchgeführten Sterilisation oder Pasteuration des Füllgutes noch bei der anschließenden Lagerung der verpackten Güter, insbesondere Lebensmittel.

Überraschenderweise wird diese Aufgabe gelöst durch Polypropylen-Haftvermittler-Metall-Verbunde der eingangs genannten Art, die dadurch gekennzeichnet sind, daß zur Herstellung der Polypropylenfolie Polypropylen-Random-Copolymerisate aus 90 bis 99 Gew.-%, bevorzugt 93 bis 99 Gew.-%, Propylen und 1 bis 10 Gew.-%, bevorzugt 1 bis 7 Gew.-%, Comonomeren mit einer Molmassenverteilung M_{w} : Mₙ im Bereich von 2 bis 10,bevorzugt 3 bis 6, und einem Schmelzindex MFI 230°C/2,16 kg im Bereich von 1 bis 20 g/10 min, bevorzugt im Bereich von 4 bis 15 g/10 min, verwendet werden.

Gegenstand der Erfindung ist außerdem die Verwendung der beschichteten Metallbleche zur Herstellung von Verpackungsbehältern.

Die Vorteile der erfindungsgemäßen Polypropylendeckschicht-Haftvermittler-Metall-Verbunde sind im wesentlichen darin zu sehen, daß die Verbunde keine Weißbruchneigung aufweisen.

Zur Herstellung der erfindungsgemäßen beschichteten Metallbleche geeignet sind Bleche einer Stärke von 0,04 bis 1 mm aus Schwarzblech, Weißblech, Aluminium und verschiedenen Eisenlegierungen, die ggf. mit einer Passivierungsschicht auf Basis von Nickel-, Chrom- und Zinkverbindungen versehen sind.

Die Metallbleche werden mit einer thermoplastischen Verbundfolie beschichtet, die aus einer Haftvermittlerschicht und der Polypropylenfolie besteht, wobei es jedoch möglich ist, auf der Polypropylenfolie noch eine oder mehrere weitere thermoplastische Schichten aufzubringen. Bevorzugt ist jedoch ein Verbund, der aus der Polypropylenfolie, der Haftvermittlerschicht und dem Metallblech besteht.

Die als Deckschicht der Verbunde verwendeteten thermoplastischen Polypropylene sind Polypropylen-Random-Copolymerisate jeweils in Form einer Folie oder eines Films. Dabei kann es sich auch um zusammengesetzte Folien und Filme (Verbundfolie und -filme) handeln, die beispielsweise erhalten werden durch gemeinsames Extrudieren verschiedener Polypropylen-Random-Copolymerisate. Derartige Polypropylenfolien werden nach bekannten Verfahren (Blasverfahren, Chill-roll-Verfahren etc.) aus Granulaten der Polypropylene gefertigt.

Erfindungsgemäß sind zur Herstellung der Polypropylenfolien der Polypropylenfolie-Haftvermittler-Metall-Verbunde statistische Polypropylen-Copolymerisate geeignet, die erhalten werden durch statistische Copolymerisation von 90 bis 99 Gew.-%, bevorzugt 93 bis 99 Gew.-%, Propylen und 1 bis 10 Gew.-%, bevorzugt 1 bis 7 Gew.-%, jeweils bezogen auf das Monomerengesamtgewicht, Comonomeren. Die statistischen Copolymere haben eine Molmassenverteilung M_{w} : Mₙ im Bereich von 2 bis 10, bevorzugt 3 bis 6, und einen Schmelzindex MFI 230°C/2,16 kg im Bereich von 1 bis 20 g/10 min, bevorzugt im Bereich von 4 bis 15 g/10 min (gemessen nach DIN 53 735). Derartige Polypropylene sowie Verfahren zu deren Herstellung sind bekannt. Sie sind beispielsweise herstellbar durch das in der DE-A-37 30 022 beschriebene Polymerisationsverfahren unter Verwendung eines Ziegler-Natta-Katalysatorsystems. Die Propylencopolymerisate sind beispielsweise in einem Gasphasenpolymerisationsverfahren bei Temperaturen von 20 bis 160 °C und bei einem Druck von 1 bis 100 bar herstellbar. Die Molekulargewichte der Polymerisate lassen sich durch allgemein bekannte Maßnahmen regeln, zum Beispiel mittels Reglern, wie beispielsweise Wasserstoff.

Geeignete Comonomere sind beispielsweise C₂- und C₄- bis C₁₂-α-Monoolefine, insbesondere C₂- und C₄-bis C₆-α-Monoolefine, wie Ethen, Buten-1, 4-Methylpenten-1, Hexen-1, n-Okten-1, n-Decen-1 und n-Dodecen-1.

Als besonders geeignet zu nennen sind dabei Polypropylen-Random-Copolymerisate aus 1 bis 4 Gew.-% Ethylen und 99 bis 96 Gew.-% Propylen, jeweils bezogen auf das Gesamtgewicht der Monomerenzusammensetzung, wobei die Random-Copolymerisate eine Molmassenverteilung M_{w} : Mₙ im Bereich von 3 bis 6 und einen Schmelzindex MFI 230°C/2,16 kg im Bereich von 5 bis 9 g/10 min (gemessen nach DIN 53 735) aufweisen. Diese Polypropylen-Copolymerisate haben einen Schmelzbereich von ca. 135 bis 155°C (ermittelt durch DSC). Bei Verwendung von Kunststoffolien auf Basis derartiger Polypropylene werden Kunststoffolie-Metall-Laminate erhalten, die keinerlei Weißbruch aufweisen.

Besonders bevorzugt sind weiterhin Polypropylen-Random-Copolymerisate aus 90 bis 97 Gew.-% Propylen, 2 bis 5 Gew.-% Ethylen und 1 bis 6 Gew.-% Buten-1, jeweils bezogen auf das Gesamtgewicht der Monomeren, die eine Molmassenverteilung M_{w} : Mₙ im Bereich von 3 bis 6 und einen Schmelzindex MFI 230°C/2,16 kg im Bereich von 4 bis 8 g/10 min aufweisen. Derartige Polypropylen-Random-Copolymerisate haben einen Schmelzbereich von 120°C bis 140°C (ermittelt durch DSC). Die Kunststoffolien, die aus diesen Polypropylenen erhältlich sind, führen zu Kunststoffolie-Metall-Laminaten, die ebenfalls keinerlei Weißbruchneigung aufweisen.

Alle angegebenen Werte für den Schmelzindex MFI beziehen sich auf die Messung gemäß DIN 53735.

Die zur Herstellung der erfindungsgemäßen Kunststoff-Metall-Verbunde verwendeten Polypropylen-Copolymerisate sind beispielsweise erhältlich unter der Handelsbezeichnung Novolen® 3225 MCX und Novolen® 3520 LX der Firma BASF AG.

Selbstverständlich können auch Mischungen der genannten Polypropylen-Copolymerisate, bevorzugt 1 : 1 Mischungen, zusammen zu einer Folie extrudiert werden.

Gemäß der vorliegenden Erfindung kann das zur Herstellung der Polypropylenfolie verwendete Polypropylen-Random-Copolymerisat bis zu 50 Gew.-% ersetzt werden durch Polypropylen-Homopolymerisat. In diesem Fall wird also eine Mischung aus statistischem Polypropylen-Copolymerisat und aus Polypropylen-Homopolymerisat zu einer Polypropylenfolie extrudiert. Wenn in der Kunststoffmischung mehr als 50 Gew.-% Polypropylen-Homopolymerisat verwendet wird, weisen die daraus hergestellten Metall-Kunststoff-Laminate eine gewisse Weißbruchneigung auf. Geeignete Propylen-Homopolymerisate haben eine Molmassenverteilung M_{w} : Mₙ im Bereich von 2 bis 10, einen Schmelzindex MFI 230°C/2,16 kg im Bereich von 1 bis 20 g/10 min (gemessen nach DIN 53 735) und einen Isotaxie-Index im Bereich von 80 bis 99 %, bevorzugt 90 bis 98 %.

Vorzugsweise wird eine Mischung aus dem beschriebenen statistischen Polyproplyen-Copolymerisat und einem Polypropylen-Homopolymerisat mit einer Molmassenverteilung M_{w}:Mₙ im Bereich von 3 bis 6 und einem Schmelzindex MFI 230 °C/2,16 kg im Bereich von 4 bis 15 g/10 min eingesetzt (gemessen nach DIN 53735). Der Isotaxie - Index dieser Polypropylen-Homopolymerisate liegt im Bereich von 80 bis 99 %, vorzugsweise im Bereich von 90 bis 98 %. Die Homopolymerisate sind bekannt und beispielsweise herstellbar durch das in der DE-A-3730022 beschriebene Polymerisationsverfahren.

Besonders bevorzugt sind Propylen-Homopolymerisate mit einer Molmassenverteilung M_{w} : Mₙ im Bereich von 3 bis 5 und einem Schmelzindex MFI 230°C/2,16 kg im Bereich von 10 bis 12 g/10 min (DIN 53 735).

Geeignete Propylen-Homopolymerisate sind beispielsweise erhältlich unter der Handelsbezeichnung Novolen® 1100 N und Novolen® 1125 N (BASF AG).

Die beschriebenen thermoplastischen Polypropylen-Kunststoffolien können noch übliche Additive, wie z.B. innere und äußere Gleitmittel, Antiblockmittel, Stabilisatoren, Antioxidantien, Pigmente, Kristallisationshilfsmittel und dergleichen enthalten. Diese Additive werden in den für die Herstellung, Verarbeitung, Konfektionierung und Anwendung notwendigen Mengen in Form von Pulver, Puder, Perlen oder direkt in dem Polymer eingearbeitet eingesetzt. Nähere Angaben zu den üblicherweise eingesetzten Mengen und Beispiele für geeignete Additive sind beispielsweise dem Buch Gächter-Müller, Kunststoffadditive, Carl-Hanser Verlag zu entnehmen.

Besonders vorteilhaft ist es, wenn die thermoplastische Polypropylenfolien bis zu 0,5 Gew.-%, bezogen auf das Gesamtgewicht der Folie, Erucasäureamid und/oder Ölsäureamid als Gleitmittel sowie bis zu 0,2 Gew.-%, bezogen auf das Gesamtgewicht der Kunststoffolie, Antiblockmittel, vorzugsweise Siliciumdioxid, sowie ggf. Antioxidantien und ggf. weitere Verarbeitungsstabilisatoren enthalten.

Als Antioxidantien werden bevorzugt Phenolderivate verwendet. Weitere geeignete Additive sind Titandioxid, Calciumcarbonat, Diatomeenerde, Calciumstearat sowie primäre und sekundäre Fettsäureamide. Als UV-Stabilisatoren werden beispielsweise UV-Stabilistoren vom HALS-Typ eingesetzt.

Die zwischen der Polypropylenträgerfolie und dem Metall angeordnete Haftvermittlerschicht kann ebenfalls die zuvor genannten Additive enthalten. Bevorzugt werden diese jedoch in die Polypropylenträgerfolie eingearbeitet.

In den erfindungsgemäßen Metall-Kunststoffolie-Laminaten stellen die Haftvermittler die Haftung zwischen dem Metallblech und der Kunstoffolie her. Der Haftvermittler-Kunststoff wird dabei zusammen mit dem Kunststoff für die Trägerfolie coextrudiert, wobei die erhaltene Coextrusionsfolie dann mittels der Haftvermittlerschicht auf das Metallblech auflaminiert wird. Als Haftvermittler werden mit Carboxylgruppen und/oder Anhydridgruppen modifizierte Polypropylen-Kunststoffe verwendet. Dabei können die als Haftvermittler verwendeten Polypropylene auch Gruppen aufweisen, die zu COOH-Gruppen hydrolisierbar sind.

Geeignete haftungsvermittelnde Polypropylene sind beispielsweise herstellbar durch Copolymerisation von Propylen mit α,β-ethylenisch ungesättigten Carbonsäuren, den entsprechenden Anhydriden oder den entsprechenden Estern oder Halbestern mit 1 bis 8 Kohlenstoffatomen im Alkoholrest. Als Carbonsäuren bzw. deren Anhydride kommen Acrylsäure, Methacrylsäure, Crotonsäure, Itaconsäure, Akonitsäure, Maleinsaure, Maleinsäureanhydrid, Zitraconsäure bzw. deren Anhydrid, Methylhydrogenmaleat und Methylhydrogenfumarat in Frage. Bevorzugt sind Acrylsäure und Methacrylsäure.

Geeignete copolymerisierbare Ester sind Ester α,β-ethylenisch ungesättigter Carbonsäuren mit 1 bis 8 C-Atomen im Alkoholrest. Bevorzugt wird dabei n-Butylacrylat verwendet.

Üblicherweise liegt die Säurekonzentration im Bereich von 5 bis 15 %.

Die säuremodifizierten Polypropylene sowie Verfahren zu deren Herstellung sind beispielsweise in der EP-A-312302 beschrieben.

Zur Herstellung der Haftvermittlerschicht geeignet sind ebenfalls Polypropylen-Pfropfcopolymerisate, die herstellbar sind durch Pfropfung von ethylenisch ungesättigten Carbonsäuren oder deren Anhydriden, wie zum Beispiel Maleinsäureanhydrid, auf Polypropylen in üblichen Mischern oder Extrudern.

Die Pfropfcopolymerisate können dadurch hergestellt werden, daß man die Basismaterialien mit Peroxiden umsetzt oder starken mechanischen Beanspruchungen unterwirft, dadurch Radikale erzeugt und sie mit geeigneten Monomeren in Kontakt bringt. Nach dem britischen Patent 679 562 können die Radikale durch Hochgeschwindigkeitsrührer, Schütteln, Mahlen, Kneten, Ultraschallschwingungen oder Passieren von Filtern bzw. Kapillarrohren mit hohen Lineargeschwindigkeiten erzeugt werden. Dadurch erfolgt ein Abbau des Polymeren, wobei reaktive Radikale gebildet werden, an denen eine Pfropfreaktion stattfinden kann.
In üblichen Extrudern kann eine Pfropfung durchgeführt werden, wenn man dem Reaktionsgemisch geeignete Initiatoren wie organische Peroxide zusetzt und die Umsetzung in einer z.B. in den US-Patenten 38 62 265, 39 53 655 und 40 01 172 beschriebenen speziellen Reaktionszone durchführt.

Die Radikale können thermisch, mittels energiereicher Strahlung oder mechanochemisch, z.B. im Scheibenextruder, erzeugt werden.

In der DE-A-36 39 564 ist ein peroxidfreies Verfahren zur Herstellung von Pfropfpolymeren von Polyolefinen beschrieben. Dieses Verfahren wird bevorzugt zur Herstellung der in den erfindungsgemäßen Verbunden verwendeten Haftvermittlern eingesetzt. Dieses peroxidfreie Verfahren hat insbesondere den Vorteil, daß keine unerwünschten Abbau- und Vernetzungsreaktionen stattfinden. Des weiteren tritt bei diesem Verfahren keine Beeinträchtigung der Polymeren in Farbe und Geruch auf, außerdem nimmt bei Verwendung von Peroxiden bei der Pfropfreaktion die Haftfähigkeit der erhaltenen Materialien gegenüber polaren Substanzen, wie Metallen, ab.

Als ethylenisch ungesättigte Carbonsäuren und/oder deren Derivate kommen insbesondere die üblichen Verbindungen, wie Maleinsäure, Fumarsäure, Itaconsäure, Acrylsäure, Acrylsäureanhydrid, Methacrylsäure, Crotonsäure, Maleinsäureanhydrid, Itaconsäureanhydrid in Betracht. Bevorzugte Verbindungen sind Maleinsäure, Fumarsäure und insbesondere Maleinsäureanhydrid.

Die zu pfropfenden Monomeren werden i.a. im Konzentrationsbereich von 0,01 bis 0,5 Gew.-%, bezogen auf die Polymermischung eingesetzt. Im allgemeinen werden dabei die zu pfropfenden Monomeren der aufgeschmolzenen Polymermischung zugemischt, und die Pfropfreaktion wird im Temperaturbereich von etwa 200°C bis etwa 300°C in üblichen Extrudern bei einem Druck von 1 bis etwa 500 bar durchgeführt.

Mit ethylenisch ungesättigten Carbonsäuren oder Carbonsäureanhydriden gepfropfte Polypropylene sind beispielsweise beschrieben in EP-A-385 645, US 4,957,820, US 4,980,210, EP-A-312 306 und EP-A-312302.

Die Basispolypropylene, auf die gepfropft wird, sind übliche Polypropylen-Homopolymerisate, Polypropylen-Random-Copolymerisate, Polpropylen-Blockcopolymerisate oder Polypropylen-Random-Blockcopolymerisate. So sind unter Polypropylen-Random-Copolymerisate statistische Copolymerisate des Propylens mit 1 bis etwa 10 Gew.-% Comonomeren zu verstehen. Geeignete Comonomere sind C₂- bis C₁₂-, insbesondere C₂- bis C₆-α-Monoolefine.

Unter den sog. Polypropylen-Blockcopolymerisaten sind Mischungen aus Polypropylen-Homopolymerisat und Propylen-Comonomer-Kautschuk zu verstehen. Im allgemeinen haben sie einen Kautschukgehalt von 15 bis 40 %. Sie sind herstellbar, indem zunächst Propylen homopolymerisiert wird und in einer zweiten Stufe ein Gemisch aus Propylen und den Comonomeren dem Polypropylen-Homopolymerisat hinzupolymerisiert wird. Propylen-Ethylen-Blockcopolymerisate sind beispielsweise beschrieben in der EP-A-131 268. Unter Polypropylen-Random-Blockcopolymerisaten sind Copolymerisate zu verstehen, deren Matrixmaterial aus Propylen-Random-Copolymerisat besteht. Von üblichen Polypropylen -Blockcopolymerisaten, die als Matrixmaterial Propylen-Homopolymerisat aufweisen, unterscheiden sich die Propylen-Random-Blockcopolymerisate durch höhere Flexibilität, Zähigkeit und bessere Verschweißbarkeit.

Die als Haftvermittler geeigneten Pfropfpolymerisate können ggf. zusammen mit nicht-gepfropfen Polypropylenen eingesetzt zu werden. Um eine gute Haftung zwischen der Polypropylen-Deckschicht und dem Metall zu erreichen, ist es jedoch notwendig, daß der Gehalt an ungesättigter Carbonsäure bzw. deren Derivaten mindestens bei 0,05 % liegt.

Besonders bevorzugt werden in den erfindungsgemäßen Verbunden Haftvermittler verwendet, die ein mit 0,1 bis 0,5 Gew.-%, bevorzugt 0,2 bis 0,4 Gew.-%, bezogen auf das Monomerengesamtgewicht, Maleinsäureanhydrid gepfropftes Polypropylen-Random-Blockcopolymerisat enthalten.
Bevorzugt sind weiterhin Haftvermittler, die ein mit 0,1 bis 0,5 Gew.-%, bevorzugt 0,2 bis 0,4 Gew.-%, bezogen auf das Monomerengesamtgewicht, Maleinsäureanhydrid gepfropftes Polypropylen-Random-Copolymerisat aus 1 bis 10 Gew.-%, bevorzugt 1 bis 7 Gew.-%, bezogen auf das Monomerengesamtgewicht, Ethylen und/oder C₄- bis C₁₀-α-Monoolefinen enthalten. Als Beispiele für geeignete C₄- bis C₁₀-α-Monoolefine sind Buten-1, 4-Methylpenten-1, Hexen-1, n-Okten-1 und n-Decen-1 zu nennen.

Die Herstellung der Kunststoffolie-Haftvermittler-Metall-Verbunde ist ein allgemein bekanntes Verfahren. Es wird dabei so vorgegangen, daß zunächst der thermoplastische Kunststoff für die Trägerfolie und der Haftvermittler zusammen coextrudiert werden. Das Metallblech wird dann mit der hergestellten Coexfolie derart bedeckt, daß die Haftvermittlerschicht des Verbundes die Metalloberfläche berührt. Durch Anwendung von Druck und Wärme wird entweder mittels einer temperierbaren Presse oder im Walzenspalt eines Walzwerkes oder Kalanders mittels temperierbarer Walzen der Polypropylenfolie-Haftvermittler-Metall-Verbund hergestellt. Der Druck und die Temperatur sind dabei so zu wählen, daß einerseits der Haftvermittler eine feste und stabile Verbindung mit der Metallfolie bzw. dem Metallblech eingeht und daß andererseits die thermoplastische Kunststoffschicht nicht aufschmilzt.

Die Beschichtung des Metallblechs bzw. die thermoplastische Verbundfolie weist im allgemeinen eine Gesamttrockenfilmstärke von weniger als 500 µm, bevorzugt 10 bis 200 µm und besonders bevorzugt von weniger als 100 µm auf. Die Stärke der Haftvermittlerschicht liegt dabei zwischen 0,5 und 100 µm. Die Stärke der Polypropylenfolienschicht ergibt sich entsprechend zu Werten zwischen 10 und 499,5 µm. Wie bereits erwähnt, sind thermoplastische Verbundfolien einsetzbar, die nur aus einer Haftvermittler- und einer Deckschicht bestehen, es sind aber auch Verbundfolien aus mehreren Schichten einsetzbar. In diesem Fall können die verschiedenen thermoplastischen Schichten aus jeweils gleichem oder aber verschiedenem Material in gleicher oder unterschiedlicher Schichtdicke bestehen.

Abschließend sei noch darauf hingewiesen, daß es auch möglich ist, das Metallblech an der dem Füllgut abgewandten Seite ebenfalls mit einer bevorzugt planebenen, thermoplastischen Verbundfolie oder aber mit einem flüssigen oder pulverförmigen Beschichtungsmittel zu beschichten.

Die erfindungsgemäßen Polypropylendeckschicht-Haftvermittler-Metall-Verbunde werden zur Herstellung von Verpackungsbehältern eingesetzt, und zwar insbesondere zur Herstellung von Böden bzw. Deckeln von Dosen, Ventiltellern von Aerosoldosen sowie von Verschlüssen. Die Herstellung der Verschlußteile erfolgt nach den üblichen Methoden (vgl. beispielsweise VR-INTERPACK 1969, Seiten 600 - 606: W. Panknin, A. Breuer, M. Sodeik, "Abstreckziehen als Verfahren zum Herstellen von Dosen aus Weißblech", SHEET METAL INDUSTRIES, August 1976: W. Panknin, CH. Schneider, M. Sodeik, "Plastic Deformation of Tinplate in Can Manufacturing"; Verpackungs-Rundschau, Heft 4/1971, Seiten 450 - 458: M. Sodeik, I. Siewert, "Die nahtlose Dose aus Weißblech"; Verpackungs-Rundschau, Heft 11/1975, Seiten 1402 - 1407: M. Sodeik, K. Haaß, I. Siewert, "Herstellen von Dosen aus Weißblech durch Tiefziehen", Arbeitsmappe für den Verpackungspraktiker, Metalle, Teil II, Gruppe 2, Weißblech, Lfd. Nr. 220.042 bis 220.048 in neue Verpackung 12/87, Seite B 244 bis B 246 und neue Verpackung 1/88, Seiten B 247 bis B 250).

Bezüglich näherer Einzelheiten wird daher auf die Literatur verwiesen.

Die erfindungsgemäßen Polypropylenfolie-Haftvermittler-Metall-Verbunde zeigen praktisch keinen Weißbruch mehr, desweiteren sind die Haftungen zwischen dem Metall und dem Haftvermittler einerseits und der Polypropylen-Kunststoffolie und dem Haftvermittler andererseits außerordentlich gut. Die Polypropylendeckschichten schützen das Metall sehr gut vor dem Angriff des Füllgutes, wobei eine Beeinflussung des Füllgutes durch Korrosionsprodukte des Metalles ebenfalls verhindert wird. Eine Beeinträchtigung des Füllgutes durch herausgelöste Bestandteile der Polypropylendeckschichtfolie ist bei Sterilisation und Lagerung der verpackten Güter nicht festzustellen.

Nachfolgend wird die Erfindung anhand von Ausführungsbeispielen näher erläutert:

### Vergleichsbeispiel 1

Ein handelsübliches Polypropylen-Homopolymerisat (Novolen® 1125 N der BASF AG) wird mit dem Haftvermittler Novatec® 196 P (Mitsubishi Chemical Ind.), beide Materialien in Granulatform, coextrudiert. Der Hauptextruder ist ein 90 mm ⌀ 25 D Extruder der Firma Barmag, der Coextruder ein 45 mm ⌀ 25 D Extruder der Firma Schwabethan. Die Buchse des Hauptextruders ist geglättet, während die des Coextruders genutet ist. Die Massetemperatur des Polypropylenhomopolymerisats Novolen beträgt 246°C, die des Haftvermittlers 285°C. Der Massedruck des Kunststoffs Novolen beträgt 75 bar, während der des Haftvermittlers 95 bar beträgt. Die Zonentemperaturen des Hauptextruders betragen 195°C bis 220°C, die des Coextruders 120° bis 250°C. Die Chill-Roll-Kühlwalze hat eine Temperatur von 15°C. Die Schichtdicke der Polypropylenträgerfolie beträgt 40 µm, die der Haftvermittlerfolie 10 µm. Es wird ein Luftrakel mit 60 mbar betrieben. Der auf Metall kaschierte Folienverbund weist nach dem Stanzen Weißbruch auf.

### Beispiel 1

Ein Polypropylen-Random-Copolymerisat der Marke Novolen® 3225 MCX der Fa. BASF AG wird zusammen mit dem Haftvermittler Novatec® 196 P (Mitsubishi Chemical Ind.) coextrudiert. Der Extruder für das Novolen (Hauptextruder) ist ein 90 mm ⌀ 25 D der Fa. Barmag, der für den Haftvermittler (Coextruder) ein 45 mm ⌀ 25 D der Fa. Schwabethan. Die Massetemperatur des Novolen-Kunststoffs beträgt 260°C, die des Haftvermittlers 285°C. Der Massedruck des Novolen-Kunststoffs beträgt 55 - 58 bar, der des Haftvermittlers 95 bar.

Die Zonentemperaturen des Hauptextruders betragen 205 bis 235°C, die des Coextruders 120 bis 250°C. Die Temperatur der Chill-Roll-Kühlwalze beträgt 30°C. Die Schichtdicken der Polypropylendeckschicht und des Haftvermittlers betragen 40 µm und 10 µm. Es wird ein Luftrakel mit 95 mbar betrieben. Der auf Metall kaschierte Folienverbund zeigt nach dem Stanzen keinen Weißbruch. Die Haftung der Kunststoffolie auf dem Metallblech liegt bei mehr als 75 N/15mm.

### Beispiel 2

Beispiel 1 wird wiederholt mit dem Unterschied, daß anstelle des Novolen® 3225 MCX (BASF AG) das Polypropylen Novolen® 3520 LX (BASF AG) verwendet wird. Der auf Metall kaschierte Folienverbund zeigt nach dem Stanzen keinerlei Weißbruch. Die Haftung zwischen Metall und Kunststoffolie liegt bei mehr als 75 N/15 mm.

### Beispiel 3

Beispiel 1 wird wiederholt mit dem Unterschied, daß anstelle des Novolen® 3225 MCX (BASF AG) eine 1 : 1 Mischung aus Novolen® 3520 LX und einem Polypropylen-Homopolymerisat (Novolen® 1125 N der Firma BASF AG) verwendet wird. Die Schichtdicke der Trägerfolie beträgt ebenfalls 40 µm. Der auf Metall kaschierte Folienverbund zeigt nach dem Stanzen praktisch keinen Weißbruch.
Die Haftung zwischen der Kunststoffolie und dem Metallblech liegt bei mehr als 75 N/15 mm.

## Patentansprüche

1. Polypropylenfolie-Haftvermittler-Metall-Verbund, wobei als Haftvermittler mit Carboxylgruppen und/oder Anhydridgruppen modifiziertes Polypropylen verwendet wird, dadurch gekennzeichnet, daß zur Herstellung der Polypropylenfolie Polypropylen-Random-Copolymerisate aus 90 bis 99 Gew.-%, bevorzugt 93 bis 99 Gew.-%, Propylen und 1 bis 10 Gew.-%, bevorzugt 1 bis 7 Gew.-%, Comonomeren mit einer Molmassenverteilung M_{w} : Mₙ im Bereich von 2 bis 10, bevorzugt 3 bis 6, und einem Schmelzindex MFI 230°C/2,16 kg im Bereich von 1 bis 20 g/10 min, bevorzugt im Bereich von 4 bis 15 g/10 min, verwendet werden.

2. Polypropylenfolie-Haftvermittler-Metall-Verbund nach Anspruch 1, dadurch gekennzeichnet, daß zur Herstellung der Polypropylenfolie Polypropylen-Random-Copolymerisate aus 1 bis 4 Gew.-% Ethylen und 99 bis 96 Gew.-% Propylen, bezogen auf das Monomerengesamtgewicht, mit einer Molmassenverteilung M_{w} : Mₙ im Bereich von 3 bis 6 und einem Schmelzindex MFI 230°C/2,16 kg im Bereich von 5 bis 9 g/10 min verwendet werden.

3. Polypropylenfolie-Haftvermittler-Metall-Verbund nach Anspruch 1, dadurch gekennzeichnet, daß zur Herstellung der Polypropylenfolie Polypropylen-Random-Copolymerisate aus 90 bis 97 Gew.-% Propylen, 2 bis 5 Gew.-% Ethylen und 1 bis 6 Gew.-% Buten-1, jeweils bezogen auf das Monomerengesamtgewicht, mit einer Molmassenverteilung M_{w} : Mₙ im Bereich von 3 bis 6 und einem Schmelzindex MFI 230°C/2,16 kg im Bereich von 4 bis 8 g/10 min verwendet werden.

4. Polypropylenfolie-Haftvermittler-Metall-Verbund nach Anspruch 1 bis 3, dadurch gekennzeichnet, daß das zur Herstellung der Polypropylenfolie verwendete Polypropylen-Random-Copolymerisat bis zu 50 Gew.-% ersetzt worden ist durch Polypropylen-Homopolymerisat.

5. Polypropylenfolie-Haftvermittler-Metall-Verbund nach Anspruch 4, dadurch gekennzeichnet, daß das verwendete Polypropylen-Homopolymerisat eine Molmassenverteilung M_{w} : Mₙ im Bereich von 3 bis 6 und einen Schmelzindex MFI 230°C/2,16 kg im Bereich von 4 bis 15 g/10 min aufweist.

6. Polypropylenfolie-Haftvermittler-Metall-Verbund nach Anspruch 1 bis 5, dadurch gekennzeichnet, daß die Polypropylenfolie bis zu 0,5 Gew.-%, bezogen auf das Gesamtgewicht der Polypropylenfolie, Erucasaureamid und/oder Ölsäureamid sowie bis zu 0,2 Gew.-%, bezogen auf das Gesamtgewicht der Polypropylenfolie, Antiblockmittel, vorzugsweise SiO₂, sowie ggf. Antioxidantien und ggf. weitere Verarbeitungsstabilisatoren enthält.

7. Polypropylenfolie-Haftvermittler-Metall-Verbund nach Anspruch 1 bis 6, dadurch gekennzeichnet, daß als Haftvermittler ein mit 0,1 bis 0,5 Gew.-%, bevorzugt 0,2 bis 0,4 Gew.-%, bezogen auf das Monomerengesamtgewicht, Maleinsäureanhydrid gepfropftes Polypropylen-Random-Blockcopolymerisat verwendet wird.

8. Polypropylenfolie-Haftvermittler-Metall-Verbund nach Anspruch 1 bis 6 dadurch gekennzeichnet, daß als Haftvermittler ein mit 0,1 bis 0,5 Gew.-%, bevorzugt 0,2 bis 0,4 Gew.-%, Maleinsäureanhydrid gepfropftes Polypropylen-Random-Copolymerisat aus 1 bis 10 Gew.-%, bevorzugt 1 bis 7 Gew.-%, bezogen auf das Monomerengesamtgewicht, Ethylen und/oder C₄- bis C₁₀-α-Monoolefinen verwendet werden.

9. Verwendung der Polypropylenfolie-Haftvermittler-Metall-Verbunde nach Anspruch 1 bis 8 zur Herstellung von Verpackungsbehältern.

## Claims

1. Polypropylene film-adhesion promoter-metal laminate, the adhesion promoter used being polypropylene modified with carboxyl groups and/or anhydride groups, characterized in that polypropylene random copolymers of 90 to 99% by weight, preferably 93 to 99% by weight, of propylene and 1 to 10% by weight, preferably 1 to 7% by weight, of comonomers having a molecular weight distribution M_{w} : Mₙ in the range from 2 to 10, preferably from 3 to 6, and a melt flow index MFI 230°C/2.16 kg in the range from 1 to 20 g/10 min, preferably in the range from 4 to 15 g/10 min, are used for the production of the polypropylene film.

2. Polypropylene film-adhesion promoter-metal laminate according to Claim 1, characterized in that polypropylene random copolymers of 1 to 4% by weight of ethylene and 99 to 96% by weight of propylene, based on the total weight of the monomers, having a molecular weight distribution M_{w} : Mₙ in the range from 3 to 6 and a melt flow index MFI 230°C/2.16 kg in the range from 5 to 9 g/10 min are used for the production of the polypropylene film.

3. Polypropylene film-adhesion promoter-metal laminate according to Claim 1, characterized in that polypropylene random copolymers of 90 to 97% by weight of propylene, 2 to 5% by weight of ethylene and 1 to 6% by weight of but-1-ene, based in each case on the total weight of the monomers, having a molecular weight distribution M_{w} : Mₙ in the range from 3 to 6 and a melt flow index MFI 230°C/2.16 kg in the range from 4 to 8 g/10 min are used for the production of the polypropylene film.

4. Polypropylene film-adhesion promoter-metal laminate according to Claim 1 to 3, characterized in that up to 50% by weight of the polypropylene random copolymer used for the production of the polypropylene film has been replaced with polypropylene homopolymer.

5. Polypropylene film-adhesion promoter-metal laminate according to Claim 4, characterized in that the polypropylene homopolymer used has a molecular weight distribution M_{w} : Mₙ in the range from 3 to 6 and a melt flow index MFI 230°C/2.16 kg in the range from 4 to 15 g/10 min.

6. Polypropylene film-adhesion promoter-metal laminate according to Claim 1 to 5, characterized in that the polypropylene film contains up to 0.5% by weight, based on the total weight of the polypropylene film, of erucamide and/or oleamide and up to 0.2% by weight, based on the total weight of the polypropylene film, of antiblocking agents, preferably SiO₂, and, if required, antioxidants and, if required, further processing stabilizers.

7. Polypropylene film-adhesion promoter-metal laminate according to Claim 1 to 6, characterized in that a polypropylene random block copolymer grafted with 0.1 to 0.5% by weight, preferably 0.2 to 0.4% by weight, based on the total weight of the monomers, of maleic anhydride is used as the adhesion promoter.

8. Polypropylene film-adhesion promoter-metal laminate according to Claim 1 to 6, characterized in that a polypropylene random copolymer which is grafted with 0.1 to 0.5% by weight, preferably 0.2 to 0.4% by weight, of maleic anhydride and comprises 1 to 10% by weight, preferably 1 to 7% by weight, based on the total weight of the monomers, of ethylene and/or C₄- to C₁₀-α-monoolefins are used as the adhesion promoter.

9. Use of the polypropylene film-adhesion promoter-metal laminates according to Claim 1 to 8, for the production of packaging containers.

## Revendications

1. Matériau composite constitué d'un film de polypropylène, d'un promoteur d'adhésion et d'un métal, étant donné que l'on utilise, en tant que promoteur d'adhésion, du polypropylène modifié à l'aide de groupements carboxyles et/ou de groupements anhydrides, caractérisé en ce que l'on utilise, en vue de la fabrication du film de polypropylène, des copolymérisats aléatoires de polypropylène obtenus à partir de 90 à 99 % en poids, de préférence de 93 à 99 % en poids de propylène et de 1 à 10 % en poids, de préférence de 1 à 7 % en poids de comonomères ayant une répartition de masse molaire M_{w} : Mₙ dans le domaine de 2 à 10, de préférence de 3 à 6, et un indice de fusion MFI 230°C/2,16 kg dans le domaine de 1 à 20 g/10 minutes, de préférence dans le domaine de 4 à 15 g/10 minutes.

2. Matériau composite constitué d'un film de polypropylène, d'un promoteur d'adhésion et d'un métal selon la revendication 1, caractérisé en ce que l'on utilise, en vue de la fabrication du film de polypropylène, des copolymérisats aléatoires de polypropylène obtenus à partir de 1 à 4 % en poids d'éthylène et de 99 à 96 % en poids de propylène, par rapport au poids total de monomères, ayant une répartition de masse molaire M_{w} : Mₙ dans le domaine de 3 à 6, et un indice de fusion MFI 230°C/2,16 kg dans le domaine de 5 à 9 g/10 minutes.

3. Matériau composite constitué d'un film de polypropylène, d'un promoteur d'adhésion et d'un métal selon la revendication 1, caractérisé en ce que l'on utilise, en vue de la fabrication du film de polypropylène, des copolymérisats aléatoires de polypropylène obtenus à partir de 90 à 97 % en poids de propylène, de 2 à 5 % en poids d'éthylène et de 1 à 6 % en poids de but-1-ène, à chaque fois par rapport au poids total de monomères, ayant une répartition de masse molaire M_{w} : Mₙ dans le domaine de 3 à 6, et un indice de fusion MFI 230°C/2,16 kg dans le domaine de 4 à 8 g/10 minutes.

4. Matériau composite constitué d'un film de polypropylène, d'un promoteur d'adhésion et d'un métal selon la revendication 1 à 3, caractérisé en ce que l'on a remplacé, en vue de la fabrication du film de polypropylène, le copolymérisat aléatoire de polypropylène utilisé en vue de la fabrication du film de polypropylène, par jusqu'à 50 % en poids total de d'homopolymérisat de polypropylène.

5. Matériau composite constitué d'un film de polypropylène, d'un promoteur d'adhésion et d'un métal selon la revendication 4, caractérisé en ce que l'homopolymérisat de polypropylène utilisé présente une répartition de masse molaire M_{w} : Mₙ dans le domaine de 3 à 6 et un indice de fusion MFI 230°C/2,16 kg dans le domaine de 4 à 15 g/10 minutes.

6. Matériau composite constitué d'un film de polypropylène, d'un promoteur d'adhésion et d'un métal selon la revendication 4, caractérisé en ce que le film de polypropylène contient jusqu'à 0,5 % en poids, par rapport au poids total du film de polypropylène, d'amide de l'acide érucique et/ou d'amide de l'acide oléique ainsi que jusqu'à 0,2 % en poids, par rapport au poids total du film de polypropylène, d'agents antiblocage, de préférence de SiO₂, ainsi que, le cas échéant, d'agents antioxydants et, le cas échéant, d'agents stabilisateurs de mise en oeuvre supplémentaires.

7. Matériau composite constitué d'un film de polypropylène, d'un promoteur d'adhésion et d'un métal selon la revendication 1 à 6, caractérisé en ce que l'on utilise, en tant que promoteur d'adhésion, un copolymérisat en bloc aléatoire de polypropylène greffé à l'aide de 0,1 à 0,5 % en poids, de préférence de 0,2 à 0,4 % en poids, par rapport au poids total de monomères, d'anhydride de l'acide maléique.

8. Matériau composite constitué d'un film de polypropylène, d'un promoteur d'adhésion et d'un métal selon la revendication 1 à 6, caractérisé en ce que l'on utilise, en tant que promoteur d'adhésion, un copolymérisat en bloc aléatoire de polypropylène greffé à l'aide de 0,1 à 0,5 % en poids, de préférence de 0,2 à 0,4 % en poids, d'anhydride de l'acide maléique, lequel copolymérisat est obtenu à partir de 1 à 10 % en poids, de préférence de 1 à 7 % en poids, par rapport au poids total de monomère, d'éthylène et/ou de alpha-monooléfines en C₄ - C₁₀.

9. Utilisation des matériaux composites constitués d'un film de polypropylène, d'un promoteur d'adhésion et d'un métal selon la revendication 1 à 8 en vue de la fabrication de récipients d'emballage.
